# EUROPÄISCHE PATENTANMELDUNG

(11) **EP 0 888 841 A2**
(43) Veröffentlichungstag der Anmeldung: **07.01.1999**
(21) Anmeldenummer: 98111589.2
(22) Anmeldetag: 24.06.1998
(51) Int. Cl.: B23B 51/04

(54) **Bohrwerkzeug mit Rechteckplatten**

(30) Priorität: 26.06.1997 DE 19727170
(71) Anmelder: WALTER AG, D-72072 Tübingen (DE)
(72) Erfinder:
(74) Vertreter: Patentanwälte Rüger, Barthelt & Abel

(57) **Zusammenfassung**

Ein Bohrwerkzeug (1) ist mit zwei rechteckigen Wendeschneidplatten (11, 12) versehen, die jeweils zwei kurze (14, 15) und zwei beträchtlich längere Schneidkanten (16, 17) aufweisen. Während die eine Wendeschneidplatte (11) an die Drehachse (24) des Bohrwerkzeugs (1) anschliessend angeordnet ist, ist die andere Wendeschneidplatte (12) an den von dem Bohrwerkzeug (1) definierten Außenkreis anschliessend angeordnet. Die jeweils an der Stirnseite des Bohrwerkzeugs aktiven Schneidkanten (14, 14') sind gerade ausgebildet und überlappen einander je nach Bohrungsdurchmesser mehr oder weniger. Die biegungs- und und knickfreie Ausbildung der aktiven Schneidkanten (14, 14') ermöglicht die Verwendung ein und derselben Wendeschneidplatten (11, 12) an Bohrwerkzeugen (1) mit unterschiedlichem Durchmesser. Lediglich der Grad der Überlappung muß geändert werden, wobei die Schnittverhältnisse im Wesentlichen unverändert bleiben. Gegenüber dem Stand der Technik sind kleinere Minimaldurchmesser möglich, weil die Zone um die Bohrung der Wendeschneidplatte für die minimale Plattengröße bestimmend ist. Die Wendeschneidplatten sind besonders einfach und über einen größeren Durchmesserbereich einsetzbar. Außerdem sind die Wendeschneidplatten besonders einfach aufgebaut. Die Kraftverhältnisse und -richtungen sind eindeutig. Die innere Schneidkante ist immer über ihre gesamte Länge im Eingriff.

## Beschreibung

Gegenstand der Erfindung ist ein Bohrwerkzeug mit den Merkmalen des Obergriffs des Patentanspruchs 1, sowie ein Satz von solchen Bohrwerkzeugen.

Ein wendeschneidplattenbestücktes Bohrwerkzeug ist bspw. in der EP 0 750 960 A1 beschrieben. Dieses Bohrwerkzeug weist einen Bohrerkörper auf, der an einem Ende einen zur Befestigung an einem entsprechenden Futter eingerichteten Schaft und an seinem anderen Ende zwei Plattensitze aufweist. An den Plattensitzen sind im Wesentlichen quadratische Wendeschneidplatten gehalten, deren vier Schneidkanten untereinander gleich ausgebildet sind. Die Schneidkanten sind geringfügig konkav gebogen, um die Bohrungswandung definiert mit einer Seitenschneide zu schlichten, die dann lediglich mit einer Ecke oder einem kurzen Abschnitt mit der Bohrungwandung in Eingriff steht.

Die beiden an der Stirnseite des Bohrwerkzeuges in entsprechenden Plattensitzen gehaltenen Wendeschneidplatten überlappen sich gegenseitig an der Werkzeugstirn, wobei insbesondere die sich an die Eckenschneiden anschliessenden Abschnitte der Schneidkanten spanabhebend wirken. Die genauen Verhältnisse sind von dem Bohrerdurchmesser und somit dem Maß der Überlappung bei der Wendeschneidplatte abhängig. Außerdem sind ausgehend von quadratischen Wendeschneidplatten vorgegebener Größe mehr als zwei Wendeschneidplatten erforderlich, wenn der Bohrerradius größer als die doppelte Kantenlänge einer Wendeschneidplatte ist.

Auch aus der WO 93/02824 sind Bohrwerkzeuge mit Wendeschneidplatten bekannt. Dieses Bohrwerkzeug weist einen Bohrerkörper mit zwei stirnseitigen Plattensitzen auf, an denen Wendeschneidplatten mit rechteckiger Grundform gehalten sind. Im einzelnen sind an der Wendeschneidplatte zwei kürzere, einander gegenüberliegende konkav gewölbte Schneidkanten ausgebildet, die über eine bogenförmig gekrümmte vorspringende Eckenschneide in ebenfalls konkav ausgebildete längere Flanken übergehen, die nicht als Schneidkante dienen. Die Wendeschneidplatten sind so in ihrer Größe auf den Bohrerdurchmesser abgestimmt, dass die radial weiter außen stehende Wendeschneidplatte mit ihrer innenliegenden Eckenschneide etwa im Bereich der Mitte der Schneidkante der radial innen angeordneten Wendeschneidplatte steht. Die Zerspanung konzentriert sich deshalb hauptsächlich auf die eckennahen Bereiche jeder Schneidkante, wohingegen die mittleren Abschnitte weitgehend entlastet sind.

Aus der DE 4018043 A1 ist ein Bohrwerkzeug mit dreieckigen Schneidplatten bekannt. Jede Schneidkante ist entweder bogenförmig konvex ausgebildet oder mit einem entsprechenden Knick versehen. Bei entsprechender Überlappung mehrerer Schneidkanten der an der Bohrerstirnseite vorgesehenen Wendeschneidplatten ergibt sich insgesamt eine gewellte oder im Zick-zack verlaufende Schneide. Die radial innen angeordnete Schneidplatte ragt mit ihrer Eckenschneide etwas über die Drehachse hinaus. Den axial am weitesten vorn liegenden Punkt bildet jedoch etwa die Mitte der Schneidkante dieser Wendeschneidplatte. Dieser Punkt liegt in relativ großer Entfernung zu der Drehachse. Dies kann zu Problemen beim Ansetzen einer Bohrung führen. Außerdem führt die Verwendung von ein und denselben Wendeschneidplatten an Bohrwerkzeugen mit unterschiedlichen Durchmessern zu unterschiedlichen Überlappungen der Wendeschneidplatten. Deren Schneiden stehen aufgrund ihrer konvex gekrümmten oder konvex geknickten Geometrie mit zunehmender Überlappung mit immer kürzer werdenden Abschnitten im Eingriff mit dem Werkstück, was zu ungleichmäßigen Beanspruchungen führen kann.

Schneidplatten sind in der Regel auf den Bohrer, d.h. das Grundwerkzeug, für das sie vorgesehen sind, abgestimmt. Damit sind für unterschiedliche Werkzeugdurchmesser, für rechtsspiralige Werkzeuge und für linksspiralige Werkzeuge unterschiedliche Schneidplatten vorzusehen. Dies stellt einen erheblichen wirtschaftlichen Aufwand dar.

Außerdem werden bei vielen Bohrwerkzeugen die Schneidplatten so eingestellt, dass beim Zerspanungsvorgang eine Radialkraft erzeugt, die den Werkzeuggrundkörper in einer Radialrichtung auslenkt. Dies führt zu einer Vergrößerung des Bohrungsdurchmessers, die von der Länge des Werkzeugs, von der Drehzahl des Werkzeugs und dem zerspanten Material abhängt.

Davon ausgehend ist es Aufgabe der Erfindung, ein Bohrwerkzeug zu schaffen, das eine wirtschaftliche Benutzung und eine gute Bearbeitungsqulität gestattet.

Darüber hinaus soll auch ein Bohrwerkzeug mit kleinem Durchmesser mit Wendeschneidplatten bestückt werden können.

Außerdem sollen die Bohrwerkzeuge vom Durchmesser unabhängig eine verbesserte Standzeit aufweisen. Schließlich soll es möglich sein, bei unterschiedlichen Bohrerdurchmessern mit ein und denselben Wendeschneidplatten auszukommen.

Diese Aufgabe wird mit dem Bohrwerkzeug mit den Merkmalen des Patentanspruchs 1 gelöst.

Das erfindungsgemäße Bohrwerkzeug weist wenigstens eine, vorzugsweise aber zwei Rechteckplatten auf, die jeweils insgesamt vier Kanten aufweisen. Die beiden einander gegenüberliegenden Schneidkanten, von denen eine aktiv ist, d.h. an der Stirnseite des Bohrers angeordnet ist, sind vollkommen gerade, d.h. ohne Biegung und Knick ausgebildet. Aktive Schneidkanten werden durch die kürzeren und/oder längeren Schneidkanten der Rechteckplatte gebildet, wobei die aktiven Schneidkanten etwa senkrecht zu der Bohrerlängsrichtung bzw. seiner Drehachse oder auch leicht geneigt angeordnet sind. Vorzugsweise sind auch die längeren Kanten vollkommen gerade, d.h. ohne Knick oder Biegung ausgebildet. Die Kombination einer langen geraden und einer kurzen geraden Schneidkante gestattet den Einbau der Wendeschneidplatte wahlweise längs oder quer, womit ein weiter Durchmesserbereich überstrichen werden kann.

Eine noch größere Überstreichung der Durchmesserbereiche mit einer Wendeschneidplattengröße wird erreicht, wenn die beiden längeren Schneidkanten zum Einsatz kommen. Durch die gerade Ausbildung der überlappenden Schneidkanten kann bei entsprechender Anordnung der aktiven Schneidkanten im Bohrerkörper erreicht werden, dass unabhängig von dem Maß der Überlappung der beiden an dem Bohrer gehaltenen Wendeschneidplatten, d.h. unabhängig von dem Bohrerdurchmesser erreicht wird, dass die beiden aktiven Schneidkanten über ihre gesamte Länge mit dem Material des Werkstücks in Eingriff kommen und somit zur Zerspanung beitragen. Dies erhöht die Standzeit des Bohrwerkzeugs. Diese Maßnahme gilt sowohl für rechteckige als auch leicht rhombische Wendeschneidplatten.

Vorzugsweise sind die Wendeschneidplatten jedoch rechteckig ausgebildet, d.h. jeweils eine lange und eine kurze Gerade ausgebildete Schneidkante schliessen dann an einer Ecke im rechten Winkel aneinander an. Solche Wendeschneidplatten erweisen sich als besonders stabil. Sie ermöglichen eine verbesserte Verteilung der Kräfte auf den Plattensitz und einen vergrößerten Abstand zwischen Gewindebohrung und der Ecke des Bohrerkörpers. Dadurch wird die Bruchgefahr des Bohrerkörpers vermindert. Durch die axial längere Platte ergibt sich eine geringere Flächenpressung und verbesserte Aufnahme ungleichmäßiger Lastverteilungen.

Die rechteckigen Schneidplatten gestatten die Bestückung sowohl rechtsspiraliger als auch linksspiraliger Werkzeuge, die zu einem Werkzeugsatz gehören können. Es ist somit möglich für viele Durchmesser und viele Werkzeugtypen (rechts, links) mit einer Schneidplattenbauform und -größe auszukommen.

Die Wendeschneidplatte ist vorzugsweise mittels einer Befestigungsschraube gehalten, die die Wendeschneidplatte mittig bei einer Befestigungsbohrung durchgreift.

Die beiden Wendeschneidplatten eines Bohrwerkzeuges sind vorzugsweise in unterschiedlichen Radialpositionen angeordnet, wobei eine Schneidplatte an den Außenkreis des Bohrwerkzeuges (Flugkreis) anschliesst und diesen definiert, während die andere Wendeschneidplatte an die Drehachse anschliesst. Unabhängig von dem Bohrerdurchmesser sind die Schneidverhältnisse im Wesentlichen gleich. Lediglich der Grad der Überlappung beider Wendeschneidplatten ändert sich von Durchmesser zu Durchmesser, wenn Bohrerkörper unterschiedlichen Durchmessers mit gleichen Wendeschneidplatten bestückt werden.

Die beiden Wendeschneidplatten des Bohrwerkzeuges sind vorzugsweise in einem 180°-Winkel zueinander angeordnet, wobei die radial innere Wendeschneidplatte axial weiter vorn angeordnet ist als die radial äußere. Dadurch ist die Schnittkraft an der inneren Schneidplatte größer als die Schnittkraft an der äußeren Wendeschneidplatte. Die Schnittkräfte treten als etwa rechtwinklig zu der jeweiligen Schneidkante gerichtete Radialkraft in Erscheinung. Nachdem die Radialkraft der inneren Wendeschneidplatte überwiegt, erhält der Bohrerkörper des Bohrwerkzeugs eine definierte, nicht zu große Radialkraft, die zu einer nur geringen flexiblen Auslenkung des Bohrerkörpers nach außen und somit zur Vergrößerung des Bohrungsdurchmessers führt. Außerdem führt die definierte Radialkraft zu einer Stabilisierung des Bohrers gegen Schwingungen. Dies auch dann, wenn die Steifigkeit des Bohrerkörpers sehr groß und die resultierende Auslenkung desselben relativ gering sind. Die hohe Steifigkeit wird vorzugsweise erreicht, indem die Spannuten lediglich um 45° Grad als Teilspirale um den Bohrerkörper herumgeführt sind.

Jedoch ist die entstehende Radialkraft nicht so groß, dass eine wesentliche Durchmesservergrößerung entstehen könnte. Dies insbesondere, wenn die Schneidplatten so eingestellt sind, dass sie das Werkstück mit ihren Schneidkanten zuerst an einem der Drehachse nahe liegenden Punkt berühren. Die entstehenden Radialkräfte sind, wie erforderlich, nicht Null, aber doch so gering, dass das Werkzeug präzise den gewünschten Durchmesser erzeugt.

Die Umfangsschneidkanten der Schneidplatten sind vorzugsweise so geneigt, dass sie mit der Drehachse und der erzeugten Bohrungswandung einen spitzen Winkel einschließen. Dies verhindert, dass die Umfangsschneiden an der Bohrungswandung schaben.

Das Bohrwerkzeug ist vorzugsweise so ausgebildet, das die innere Wendeschneidplatte mit ihrer innenliegenden Eckenschneide bei der Drehachse liegt. Vorzugsweise geht die Drehachse etwa mittig an der Eckenschneide vorbei oder schneidet diese. Durch eine geringfügige Kippung der Wendeschneidplatte gegen die Drehachse wird erreicht, dass der axial am weitesten vorn liegende Punkt der Übergang zwischen der aktiven Hauptschneide und der Eckenschneide ist, die unmittelbar bei der Drehachse liegt. Dadurch werden im Bereich der Bohrermitte definierte Zerspanungsverhältnisse erreicht. Es wird ein Drücken des Bohrers im Bereich der Drehachse vermieden und beim Bohrvorgang bleibt vorübergehend ein dünner Zapfen oder eine Nadel nicht weggebohrten Materials stehen. Dies insbesondere dann, wenn die resultierende Radialkraft den Bohrerkörper minimal auslenkt. Der stehenbleibende Mittelzapfen wird beim Bohren laufend durch die Späne abgebrochen, weggedrückt oder abgeschert, spätestens aber, wenn der Bohrerkörper aus seiner durch Radialkraft ausgelenkten Position in seine nicht ausgelenkte Position zurückkehrt. Dies kann dadurch erreicht werden, dass der Übergang zwischen Eckenschneide und Hauptschneide axial weiter vorn liegt als die Eckenschneide selbst. Insbesondere wird dies aber erreicht, wenn dieser Übergangspunkt der insgesamt axial am weitesten vorn liegende Punkt ist.

Durch die genannte Anordnung der Schneidplatten an dem Bohrwerkzeug wird erreicht, dass beim Beginn des Bohrvorgangs und während des Bohrens im vollen Schnitt keine Richtungsumkehr der Summenschneidkraft auftritt, zumal die durch die Zerspanung hervorgerufenen Kräfte im Bereich der Drehachse etwa so gerichtet sind, wie an der übrigen Schneidkante. Punktueller übermäßiger Verschleiß wird so vermieden.

Die rechteckigen Wendeschneidplatten an den Bohrwerkzeugen ermöglichen es wie erwähnt außerdem, einen gegenüber quadratischen Platten erheblich größeren Durchmesserbereich abzudecken. Werden bspw. in einem Werkzeugsatz mehrere Bohrerkörper für unterschiedliche Bohrerdurchmesser vorgesehen, können diese Bohrer unter Umständen mit einer einzigen Sorte Wendeschneidplatten bestückt werden. Dies ist möglich, wenn die Wendeschneidplatten in Bohrerkörpern mit geringerem Durchmesser längs, und in Bohrerkörper mit größerem Durchmesser quer eingebaut werden. Dies bedeutet, das bei den Bohrern mit geringerem Durchmesser die kurzen Schneidkanten der Wendeschneidplatten die aktiven Schneidkanten bilden, während bei den Wendeschneidplatten der Bohrwerkzeuge mit größerem Durchmesser die längeren Schneidkanten die aktiven Schneidkanten bilden. Feinabstufungen der Bohrerdurchmesser werden durch unterschiedliche Überlappungen der Wendeschneidplatten bewirkt. Die Schneid- oder Zerspanungsverhältnisse sind durch den Eingriff der Wendeschneidplatten mit dem Werkstück jeweils über ihre gesamte Schneidkantenlänge ähnlich.

Weitere Einzelheiten vorteilhafter Ausführungsformen ergeben sich aus der Zeichnung und der dazugehörigen Beschreibung. In der Zeichnung sind Ausführungsbeispiele der Erfindung dargestellt. Es zeigen:
Fig. 1 ein erfindungsgemäßes Bohrwerkzeug mit rechteckiger Wendeschneidplatte in einer vereinfachten Perspektivdarstellung,
Fig. 2 die Anordnung der Schneidplatten in dem Bohrwerkzeug nach Figur 1, schematisch übereinander projiziert und mit stark übertriebener dargestellten Kippung gegen die Drehachse in schematischer Darstellung,
Fig. 2a die Anordnung der Schneidplatte nach Figur 2, in vergrößerter Darstellung,
Fig. 3
   bis 5, 5a, 5b, 6 und 7 jeweils ein Bohrwerkzeug in Seitenansicht sowie mit separat dargestellter Projektion der Schneidplatten und in Stirnansicht, jeweils in schematisierter Darstellung.

### Beschreibung:

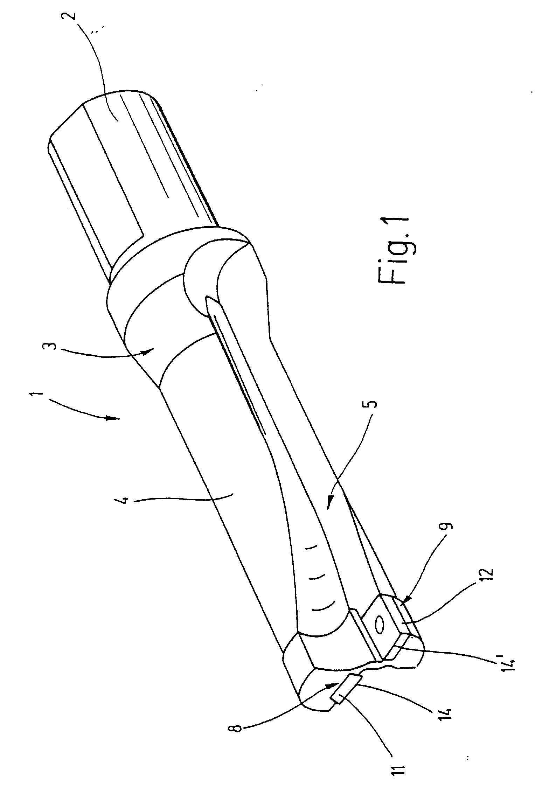

In Figur 1 ist ein Bohrwerkzeug 1 veranschaulicht, das einen an einem Ende mit einem Schaft 2 versehenen Bohrerkörper 3 aufweist. An seinem dem Schaft 2 gegenüberliegenden, im Wesentlichen zylindrischen Ende 4 sind Spannuten 5 ausgebildet, die als Teilschraube mit einer Drehung von z. B. 45° Grad um die Drehachse des Bohrwerkzeugs 1 herumführen. Stirnseitig ist das Ende 4 des Bohrwerkzeugs 1 mit zwei Plattensitzen 8, 9 ausgestattet, an denen Wendeschneidplatten 11, 12 gehalten sind. Während die Wendeschneidplatte 11 radial weiter innen gehalten ist und die Drehachse berührt oder überschneidet, ist die Wendeschneidplatte 12 radial weiter außen angeordnet und bestimmt den Bohrungsdurchmesser.

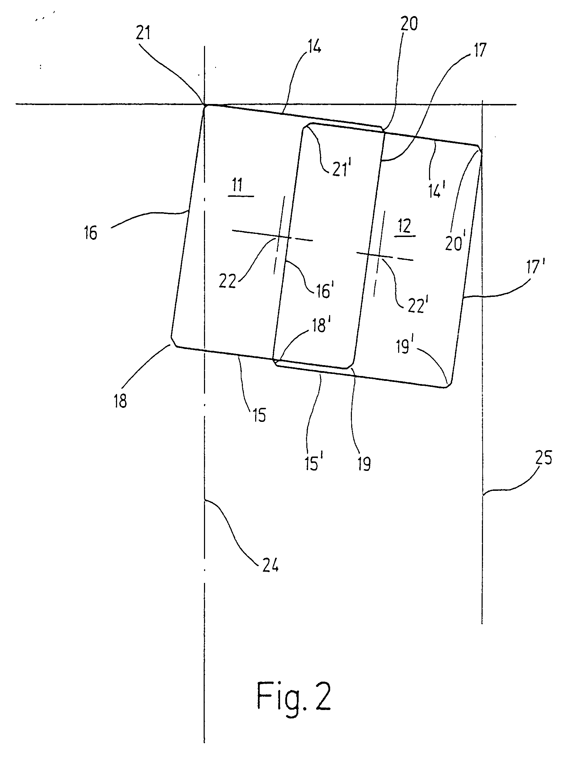

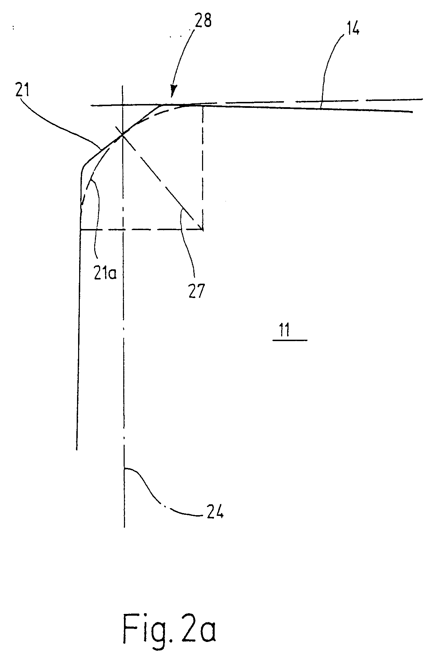

Die Wendeschneidplatten 11, 12 sind, wie insbesondere aus Figur 2 sowie den Figuren 3 bis 7 hervorgeht, rechteckig ausgebildet. Wie Figur 2 veranschaulicht, in der die Wendeschneidplatten 11, 12 in Umfangsrichtung übereinander projiziert dargestellt sind, weist die Wendeschneidplatte 11 zwei einander gegenüberliegende kurze Schneidkanten 14, 15 und zwei ebenfalls einander gegenüberliegende, zueinander parallele längere Schneidkanten 16, 17 auf. An jeder Ecke schliessen einander benachbarte Schneidkanten 14, 16', 16, 15', 15, 17', 17, 14 bei entsprechenden Eckenschneiden 18, 19, 20, 21 aneinander an. Entsprechende Schneidkanten und Eckenschneiden weist die identisch ausgebildete Wendeschneidplatte 12 auf. Die Schneidkanten und Eckenschneiden sind mit gleichen zu Unterscheidung mit einem Apostroph versehenen Bezugszeichen bezeichnet. Die Schneidkanten 14, 15, 16, 17 sind knick- und biegungsfrei gerade ausgebildet.

Beide Wendeschneidplatten 11, 12 weisen eine zentrale Befestigungsbohrung 22, 22' auf, die in Figur 2 lediglich durch ihren Mittelpunkt angedeutet ist. Die Befestigungsbohrung 22, 22' ist von einer nicht weiter dargestellten Klemmschraube durchgriffen, mit der die Wendeschneidplatte 11, 12 gegen den Plattensitz gepresst ist.

Die Einstellung der rechteckigen Wendeschneidplatten 11, 12 ist in Figur 2 übertrieben dargestellt. Die Wendeschneidplatten 11, 12 sind zueinander im Wesentlichen parallel orientiert, wobei die Eckenschneidkante 20' der radial äußeren Wendeschneidplatte 12 den Bohrungsdurchmesser definiert und die Eckenschneide 21 der radial inneren Wendeschneidplatte 11 die Drehachse 24 des Bohrwerkzeugs 1 überlappt. Die Wendeschneidplatte 11 ist axial weiter vorne, d.h. weiter von dem Schaft 2 entfernt angeordnet als die Wendeschneidplatte 12. Die aktiven Schneidkanten 14, 14' sind jedoch im Wesentlichen parallel zueinander angeordnet. Gegen die Drehachse 24 sind die Wendeschneidplatten 11, 12 etwas gekippt, so dass die Schneidkanten 16, 16' die deutlich länger sind als die Schneidkanten 14, 14' mit der Drehachse 24 einen spitzen Winkel im Bereich von 0,5 bis 3° Grad einschliessen. Vorzugsweise wird der Winkel im Bereich von 1 bis 2° Grad festgelegt. Den gleichen Winkel schliesst die Schneidkante 17' mit einer Bohrungswandung 25 ein.

Die genaue Anordnung der Wendeschneidplatte 11 ergibt sich aus Figur 2a. Die Eckenschneide 21 kann, wie in dick ausgezogener Linie dargestellt, durch ein kurzes Geradenstück gebildet sein. Es ist jedoch auch möglich, das die Eckenschneide bogenförmig auszubilden, wie mit einer gestrichelten Linie 21a in Figur 2a dargestellt ist. In jedem Fall ist die Wendeschneidplatte 11 jedoch so angeordnet, dass die Drehachse 24 etwa im Bereich der Mitte der Eckenschneide 21 an dieser vorbeigeht oder sie schneidet. Unabhängig von der Form der Eckenschneide 21 ist deren Mitte im Wesentlichen durch die Winkelhalbierende 27 der Ecke definiert. Durch diese Anordnung der Ecke und die insbesondere aus Figur 2 ersichtliche Schrägstellung der Wendeschneidplatte 11 gegen die Drehachse 24 ergibt sich der axial am weitesten vornliegende, höchste Schneidenpunkt 28 unmittelbar im Übergang zwischen der Eckenschneide 21 und der aktiven Schneidkante 14.

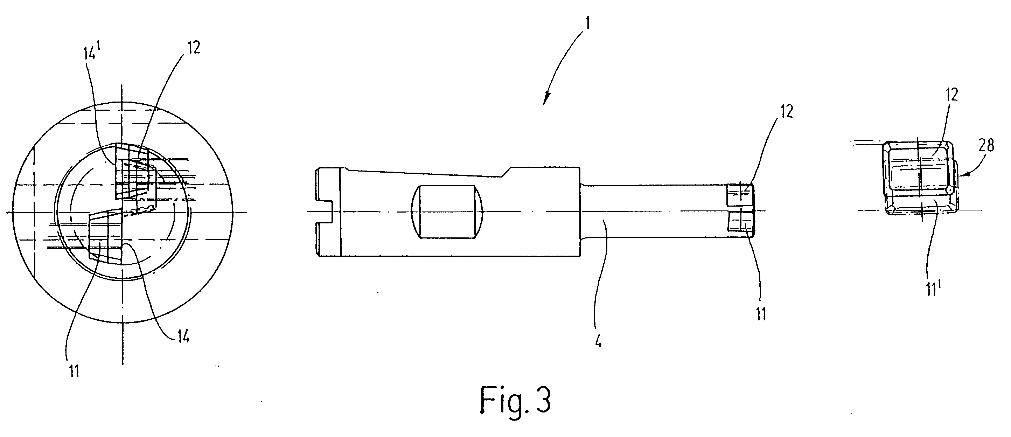

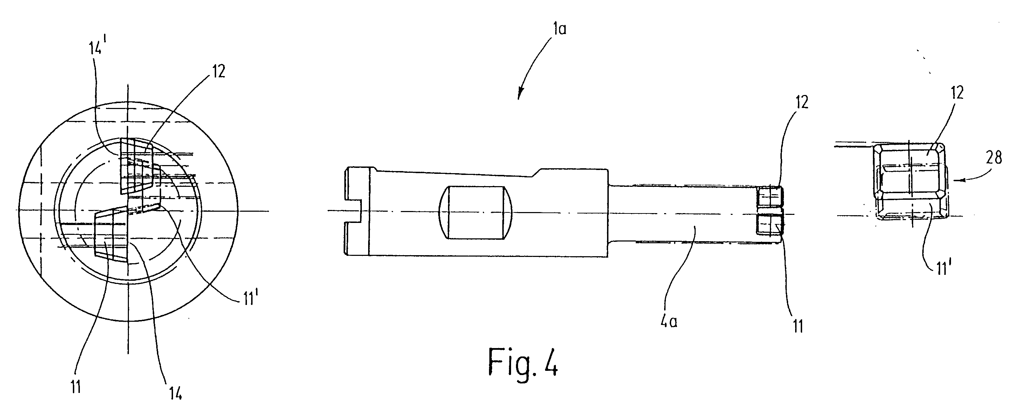

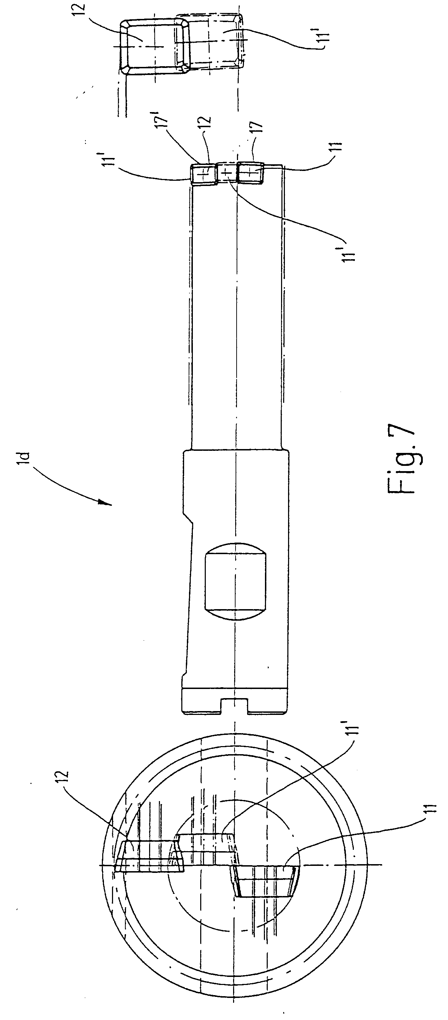

Die insoweit veranschaulichte Grundgeometrie ermöglicht den Aufbau eines Bohrwerkzeugsatzes wie er in den Figuren 3 bis 7 veranschaulicht ist. Während das in Figur 3 veranschaulichte Bohrwerkzeug 1 mit dem geringsten Durchmesser einen Bohrungsdurchmesser von etwa 10mm erzeugt, liefert das Bohrwerkzeug 1d nach Figur 7 einen Bohrungsdurchmesser von etwas über 18mm. Die mit gleichen zur Unterscheidung lediglich mit Buchstabenindices versehenen Bohrwerkzeuge 1 bis 1d unterscheiden sich neben ihrem Durchmesser lediglich durch die Ausbildung der Plattensitze 8, 9 und die sich daraus ergebende Einstellung der Wendeschneidenplatten 11, 12. Jedoch sind für alle Bohrwerkzeuge 1 bis 1d einheitliche Wendeschneidplatten 11, 12 verwendet. Wie Figur 3 veranschaulicht, sind bei dem dünnsten Bohrwerkzeug 1 die Wendeschneidplatten 11, 12 längs eingebaut und überlappen einander deutlich. Aus der linksseitig dargestellten, stark vergrößerten Stirnansicht geht hervor, dass die radial innen angeordnete Wendeschneidplatte 11 mit ihrer Schneidkante 14 etwa Werkzeugmitte bzw. der Werkzeugachse/ Drehachse angeordnet ist, wohingegen die Schneidplatte 14' der Wendeschneidplatte 12 über Mitte angestellt ist. Das gilt prinzipiell auch für das in Figur 4 dargestellte Bohrwerkzeug 1a, bei dem jedoch die Überlappung zwischen den Wendeschneidplatten 11, 12 etwas geringer ist. Dies geht aus der rechtseitigen vergrößerten, separaten Darstellung der Wendeschneidplatten 11, 12 hervor, wobei die Wendeschneidplatte 11 strichpunktiert auf die Seite der Wendeschneidplatte 12 projiziert dargestellt und mit 11' bezeichnet ist.

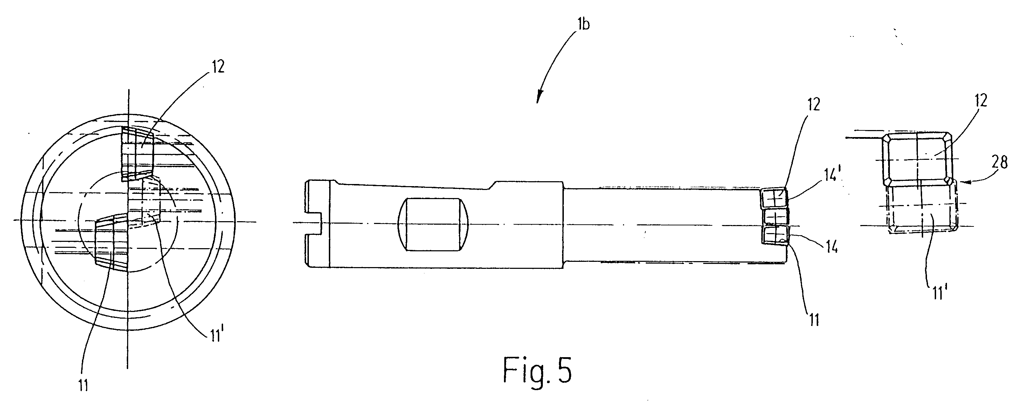

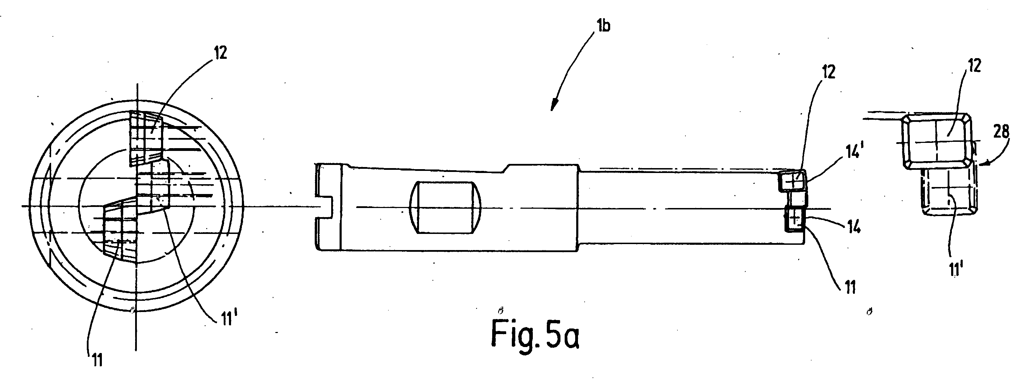

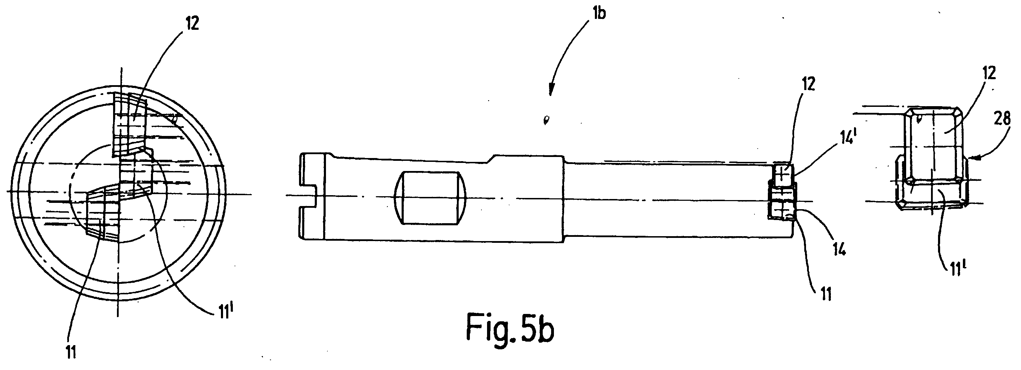

Der sich ergebende Überlappungsbereich 29 ist im Vergleich zu dem Überlappungsbereich 29 des Bohrwerkzeugs 1 mit dem nächstkleineren Durchmesser deutlich vermindert. Noch weiter vermindert ist der Überlappungsbereich 29, bei dem in Figur 5 dargestellten Bohrwerkzeug 1b. Bei diesem sind beide Wendeschneidplatten 11, 12 praktisch mit der gesamten Länge ihrer Schneidenkanten 14, 14' mit voller Spandicke im Eingriff mit dem Werkstück. Alternative Ausführungsformen des Bohrwerkzeugs 1b sind in den Figuren 5a und 5b veranschaulicht. Bei diesem ist jeweils eine radial orientierte Schneidplatte 11, 12 mit einer axial orientierten Schneidplatte 12, 11 kombiniert.

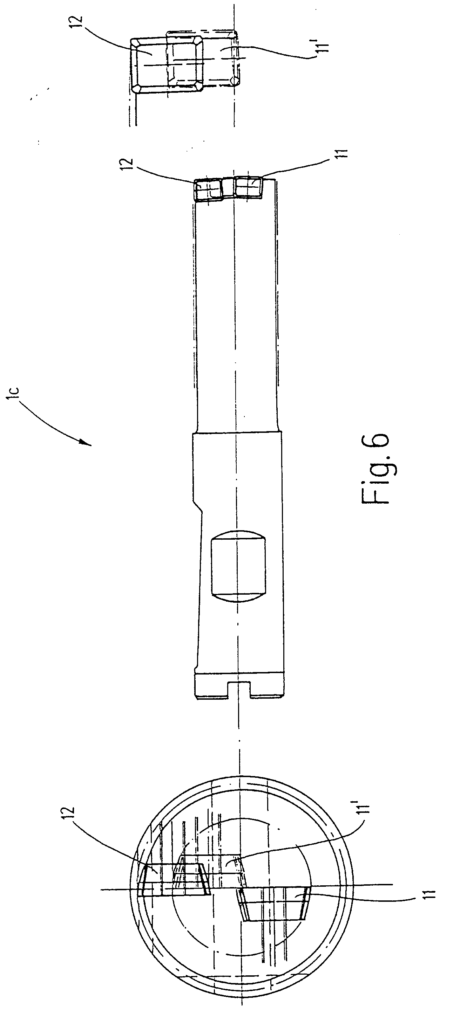

Bei noch größeren Bohrerdurchmessern, wie sie bei den in den Figuren 6 und 7 veranschaulichten Bohrwerkzeugen 1c, 1d anzutreffen sind, sind die Wendeschneidplatten 11, 12 nicht mehr längs sondern quer eingebaut. Möglich ist auch eine Kombination einer längs eingebauten Wendeschneidplatte 11 mit einer quer eingebauten Wendeschneidplatte 12. Die quer eingebauten Wendeschneidplatte 11, 12 sind mit ihren längeren Schneidkanten 17, 17' aktiv, während die kürzere Schneidkante 14' die Umfangsschneidkante bildet. Alle Bohrwerkzeuge 1 bis 1d sind mit einheitlichen Wendeschneidplatte 11, 12 bestückt, so dass die sich ergebende erforderliche Lagerhaltung und Bevorratung auf ein Minimum reduziert ist.

Beim Einsatz des insoweit beschriebenen Bohrwerkzeugs 1 (sowie 1a bis 1d), ergeben sich aufgrund der rechteckigen Geometrie der Wendeschneidplatten und der Kombinationsmöglichkeiten in der Position vorteilhafte Schnitt- und Kräfteverhältnisse. Der Plattensitz für die radial außen angeordnete Wendeschneidplatte 12 weist eine axiale Anlagefläche zur Aufnahme der auf die Wendeschneidplatte 12 einwirkenden Axialkräfte, sowie eine großflächige Anlagefläche für die Grundfläche der Wendeschneidplatte und eine seitliche Anlagefläche auf. Der Plattensitz ist geometrisch einfach und kann kostengünstig präzise hergestellt werden. Es kann dadurch auf einfache Weise eine präzise Halterung der Wendeschneidplatten 11, 12 erzielt werden. Die Kräfteaufnahme ist insbesondere infolge des relativ großen Abstandes zwischen der Befestigungsschraube und der aktiven Schneidkante 14, 14' bei den Bohrwerkzeugen 1, 1a, 1b gut. Biegebeanspruchungen an der Wendeschneidplatte 11, 12 die im Bereich der Befestigungsbohrung zum Plattenbruch führen könnten, sind wegen des Abstandes der Befestigungsschraube von der aktiven Schneidkante so weit reduziert, dass sie absolut ungefährlich sind. Dies gilt auch für die quergestellten, rechteckigen Wendeschneidplatten 11, 12 bei den Bohrwerkzeugen 1c, 1d nach den Figuren 6 und 7. Zwar ist hier der Abstand zwischen der Befestigungsschraube und der aktiven Schneidkante 17, 17' geringer, jedoch ist hier wiederum die Schwächung der Wendeschneidplatte im Bezug auf Biegebeanspruchungen wegen der breiten Unterstützung der Wendeschneidplatten 11, 12 entsprechend geringer bzw. auf einen größeren Bereich verteilt.

Beim Ansetzen des Bohrwerkzeugs 1 (sowie 1a bis 1d) wird zunächst der aus Figur 2a ersichtliche höchste Punkt 28 mit der Werkstückoberfläche in Kontakt gebracht, der einen sehr engen Kreis um die Drehachse 24 zieht. Unter Ausbildung eines Spans kommt somit unmittelbar darauffolgend die gesamte Schneidkante 14 (17) mit dem Werkstück in Eingriff und darauf die Schneidkante 14' (17') der radial weiter außen angeordneten Schneidplatte 12.

Aufgrund der axialen Einstellung der beiden Wendeschneidplatten 11, 12 mit axial weiter vorn liegender inneren Wendeschneidplatte 11 sind die von dieser Schneidplatte ausgehenden Reaktionskräfte größer als die prinzipiell entgegengerichteten Reaktionskräfte der außenliegenden Wendeschneidplatte 12. Es verbleibt somit eine Radialkraft, die im Ergebnis die Tendenz hat, den Bohrerschaft nach einer Seite auszulenken. Diese mit dem Bohrer mitdrehende Radialkraft bewirkt eine definierte Belastung des Bohrwerkzeugs 1 in Seitenrichtung und vermeidet somit einen undefinierten zu Schwingungen neigenden Zustand. Außerdem kann damit eine geringfügige flexible Auslenkung des Endes 4 des Bohrwerkzeuges 1 erreicht werden, wodurch der Bohrungsdurchmesser geringfügig vergrößert wird.

Die Eckenschneide 21 umkreist die Drehachse 24 mit engem Radius, so dass sie ohne zu drücken einen Span abhebt, wobei koaxial zu der Drehachse 24 ein Zapfen oder eine Nadel nicht abgetragenes Material stehenbleibt. Vorzugsweise ist das Bohrwerkzeug 1 so eingestellt, dass die Eckenschneide 21 die Drehachse 24 schneidet, wenn das Bohrwerkzeug 1 in Ruhe ist. Durch die beim Bohren entstehende Radialkraft wird das Bohrwerkzeug 1 so ausgelenkt, dass die Wendeschneidplatte 11 mit ihrer Eckenschneide 21 von der Drehachse 24 weggedrückt wird und derart auf einem Kreis um die Drehachse 28 läuft. Bei Stillstand des Bohrwerkzeugs 1 kehrt dieses zurück und die Eckenschneide 21 schert evtl. stehengebliebenes Material ab.

Die in Figur 2 angedeutete als Umfangschneide dienende Schneidkante 17' steht aufgrund der geringfügigen Schrägstellung der Wendeschneidplatte 12 um etwa 1° Grad lediglich mit einem sich an die Eckenschneide 20' anschliessenden Bereich im Eingriff mit der Bohrungswandung. Ist der Bohrvorgang beendet, kehrt der Bohrerkörper 3 des Bohrwerkzeugs 1 in seine nicht ausgelenkte Mittellage zurück, wobei sich die Eckenschneide 20' und die Schneidkante 17' von der Bohrungswandung 25 trennen. Das Bohrwerkzeug 1 kann aus der Bohrung herausgeführt werden ohne dass an der Bohrungswandung 25 Riefen entstehen.

Ein Bohrwerkzeug 1 ist mit zwei rechteckigen Wendeschneidplatten 11, 12 versehen, die jeweils zwei kurze 14, 15 und zwei beträchtlich längere Schneidkanten 16, 17 aufweisen. Während die eine Wendeschneidplatte 11 an die Drehachse 24 des Bohrwerkzeugs 1 anschliessend angeordnet ist, ist die andere Wendeschneidplatte 12 an den von dem Bohrwerkzeug 1 definierten Außenkreis anschliessend angeordnet. Die jeweils an der Stirnseite des Bohrwerkzeugs aktiven Schneidkanten 14, 14' sind gerade ausgebildet und überlappen einander je nach Bohrungsdurchmesser mehr oder weniger. Die biegungs- und knickfreie Ausbildung der aktiven Schneidkanten 14, 14' ermöglicht die Verwendung ein und derselben Wendeschneidplatten 11, 12 an Bohrwerkzeugen 1 mit unterschiedlichem Durchmesser. Lediglich der Grad der Überlappung muß geändert werden, wobei die Schnittverhältnisse im Wesentlichen unverändert bleiben. Gegenüber dem Stand der Technik sind kleinere Minimaldurchmesser möglich, weil die Zone um die Bohrung der Wendeschneidplatte für die minimale Plattengröße bestimmend ist. Die Wendeschneidplatten sind besonders einfach und über einen größeren Durchmesserbereich einsetzbar. Außerdem sind die Wendeschneidplatten besonders einfach aufgebaut. Die Kraftverhältnisse und -richtungen sind eindeutig. Die innere Schneidkante ist immer über ihre gesamte Länge im Eingriff.

## Patentansprüche

1. Bohrwerkzeug (1), insbesondere für metallische Werkstoffe,
mit einem im wesentlichen zylindrischen, um eine Drehachse (24) zu drehenden Bohrerkörper (3), der an einem einspannseitigen Ende einen koaxialen Spannschaft (2) trägt und der an seinem anderen, schneidenseitigen Ende (4) mit wenigstens einer viereckig ausgebildeten Wendeschneidplatte (11) bestückt ist, die vier Schneidkanten (14, 15, 16, 17) aufweist,
mit wenigstens einem zur Halterung der Wendeschneidplatte (11, 12) dienenden Sitz, der an dem schneidenseitigen Ende (4) des Bohrerkörpers (3) angeordnet ist und von dem sich ein Spanraum (5) weg erstreckt,
dadurch gekennzeichnet,
daß die Wendeschneidplatte (11) eine Rechteckplatte mit über ihre geamte Länge geraden Schneidkanten (14, 15, 16, 17) ist, wobei Schneidkanten (14, 15, 16, 17), die sich jeweils an eine gemeinsame Ecke anschliessen, jeweils unterschiedlich lang ausgebildet sind, und von denen entsprechend dem Durchmesser des Bohrerkörpers (3) die lange oder die kurze Schneidkante (14, 15, 16, 17) an der Stirnseite des Bohrerkörpers (3) positionierbar ist, und

2. Bohrwerkzeug nach Anspruch 1, dadurch gekennzeichnet, daß die Wendeschneidplatte (11, 12) mittig eine Befestigungsbohrung (22) aufweist, die von einer Befestigungsschraube durchgriffen ist.

3. Bohrwerkzeug nach Anspruch 1, dadurch gekennzeichnet, daß der Bohrerkörper (3) zwei Plattensitze und zwei Wendeschneidplatten (11, 12) aufweist, wobei die Wendeschneidplatten (11, 12) in voneinander abweichenden Radialpositionen angeordnet sind, so daß sich ihre an der Stirnseite des Bohrerkörpers (3) aktiven Schneidkanten nur abschnittsweise überlappen.

4. Bohrwerkzeug nach Anspruch 3, dadurch gekennzeichnet, daß die radial innen angeordnete Wendeschneidplatte (11) mit ihrer aktiven Schneidkante (14) einer die Drehachse (24) schneidenden Linie angeordnet ist.

5. Bohrwerkzeug nach Anspruch 3, dadurch gekennzeichnet, daß die radial außen angeordnete Wendeschneidplatte (12) mit ihrer aktiven Schneidkante auf einer die Drehachse (24) nicht schneidenden Linie angeordnet ist.

6. Bohrwerkzeug nach Anspruch 4 und 5, dadurch gekennzeichnet, daß die von den aktiven Schneidkanten (14, 14') definierten Linien zueinander annähernd parallel verlaufen.

7. Bohrwerkzeug nach Anspruch 3, dadurch gekennzeichnet, daß die aktive Schneidkante (14) der radial innen angeordneten Wendeschneidplatte (11) axial weiter vorn angeordnet ist, als die aktive Schneidkante (14') der radial weiter außen angeordneten Schneidkante (12).

8. Bohrwerkzeug nach Anspruch 3, dadurch gekennzeichnet, daß die wenigstens eine Wendeschneidplatte (11) eine im Bereich der Drehachse angeordnete Eckenschneide (21) aufweist und daß die Wendeschneidplatte (11) durch entsprechende Ausbildung des Plattensitzes derart eingestellt ist, daß sie sich wenigstens mit einem gewissen Bereich über die Drehachse (24) hinaus erstreckt.

9. Bohrwerkzeug nach Anspruch 8, dadurch gekennzeichnet, daß die Drehachse (24) die Eckenschneide (21) im wesentlichen mittig überquert.

10. Bohrwerkzeug nach Anspruch 8, dadurch gekennzeichnet, daß der Plattensitz des Bohrerkörpers (3) derart ausgebildet ist, daß die Wendeschneidplatte (11) mit ihrem Übergang von der aktiven Schneidkante (14) zu der Eckenschneide (21) einen höchsten Schneidenpunkt (28) definiert, der axial weiter vorn liegt, als jeder jenseits der Drehachse (24) befindliche Kantenabschnitt.

11. Bohrwerkzeug nach Anspruch 10, dadurch gekennzeichnet, daß der Übergang von der aktiven Schneide (14) zu der Eckenschneide (21) den axial am weitesten vorn liegenden Schneidenpunkt (28) bildet.

12. Bohrwerkzeug nach Anspruch 1, dadurch gekennzeichnet, daß die aktive Schneidkante (14) der inneren Schneidplatte (11) in Betrieb mit ihrer ganzen Länge mit dem Werkstück in Eingriff steht.

13. Bohrwerkzeugsatz mit Bohrwerkzeugen nach Anspruch 1, dadurch gekennzeichnet, daß die Bohrwerkzeuge (1, 1a - 1d) des Bohrwerkzeugsatzes unterschiedliche Durchmesser aufweisen und daß alle Bohrwerkzeuge (1, 1a - 1d) mit einheitlichen rechteckigen Wendeschneidplatten (11, 12) bestückt sind.

14. Bohrwerkzeugsatz nach Anspruch 13, dadurch gekennzeichnet, daß jedes Bohrwerkzeug (1, 1a - 1d) jeweils zwei Plattensitze aufweist und die unterschiedlichen Durchmesser durch unterschiedlich große Überlappung der Schneidplatten (11, 12) erreicht sind, wobei im Überlappungsbereich vorzugsweise beide Schneidkanten aktiv sind.

15. Bohrwerkzeugsatz nach Anspruch 13, dadurch gekennzeichnet, daß wenigstens ein Bohrwerkzeug (1d) des Bohrwerkzeugsatzes wenigstens einen Plattensitz aufweist, der die Wendeschneidplatte (11, 12) in einer solchen Position einstellt, daß sie mit ihrer längeren Schneidkante (17, 17') an der Stirnseite des Bohrwerkzeugs (1d) aktiv ist.
